# EUROPEAN PATENT SPECIFICATION

(11) **EP 2 222 556 B1**
(45) Date of publication and mention of the grant of the patent: **12.09.2012**
(21) Application number: 08860888.0
(22) Date of filing: 19.11.2008
(51) Int. Cl.: B64D 1/00, B64D 1/10

(54) **FIXING EXTERNAL LOADS TO AIRCRAFT**
BEFESTIGUNG VON AUSSENLASTEN AN EINEM FLUGZEUG
FIXATION DE CHARGES EXTÉRIEURES À UN AVION

(30) Priority: 18.12.2007 GB 0724563; 18.12.2007 EP 07254925
(43) Date of publication of application: 01.09.2010
(73) Proprietor: BAE Systems PLC, London SW1Y 5AD (GB)
(72) Inventor: NOBLETT, James, Raymond, Preston, Lancashire PR4 1AX (GB); BENNETT, Peter, Richard, Preston, Lancashire PR4 1AX (GB); BROWN, Robert, Preston, Lancashire PR4 1AX (GB)
(86) International application number: PCT/GB2008/051085
(87) International publication number: WO 2009/077775

(56) References cited:
- US-A- 3 689 012
- US-A- 4 318 328
- US-A- 4 632 340

## Description

This invention relates to the fixing of external loads to the wings of aircraft, in particular aircraft which fly at relatively low speed where aerodynamic drag is not high.

Aircraft are designed to carry objects such as engines, external fuel tanks or weapons externally of, and usually underneath, the aircraft wings. Conventionally this is done by designing pylons, struts or the like which form a permanent part of the aircraft structure and which mount the object to the wing. Where the object is jettisonable (such as a bomb or a fuel tank) and/or not required to be fitted to the aircraft on every flight, the pylon remains attached to the aircraft even when not needed. Furthermore, conventional pylons are usually designed to carry only one object or type of object. Thus, where there is a requirement to carry a variety of objects on the same aircraft at different times, conventional arrangements are inconvenient: in order to utilise a pylon designed to carry one kind of object to carry a different type of object may necessitate removing and exchanging the pylon, or having some intermediate element to "adapt" the pylon. Whatever the solution, there is still a need for a cheap and easy way to attach different loads to the aircraft in a manner which does not place unacceptable structural loads on the aircraft or require the modification of the aircraft design. Document US 4318328, US 3689012 and US 4632340. Show examples of removable devices which can be attached to aircraft parts.

The present invention therefore provides a fitting for demountably connecting an external load to an aircraft wing having an aerodynamic outer surface, the fitting comprising a selectively operable clasp, the inner surface of which is configured when the clasp is closed so as to surround a portion of the wing and to conform closely to the aerodynamic outer surface, so as to clamp the fitting firmly to the wing, and means to hold the clasp in the closed position around the wing.

Such an arrangement is cheap, simple and very flexible, allowing different loads to be mounted to the aircraft with little disruption and quickly - which can be critically important in an operational situation.

For aerodynamic and other flight operation reasons it is usually preferred that the clasp, and the external load, are carried so as to lie substantially parallel to the forward axis of the aircraft, and the clasp is suitably configured to accommodate this.

Preferably the outer surface of the clasp is configured so as to blend smoothly with the aerodynamic outer surface of the wing, to reduce aerodynamic drag.

The clasp may be flexible and/or it may incorporate a hinge to facilitate opening of the clasp to admit the wiring and closure of the clasp to clamp firmly against the wing. If the clasp is flexible, the flexibility can act to pinch the wing, in a "snap fit", when the clasp is closed. Where the clasp is held closed by bolts or the like, tightening of these holding means to close the clasp can provide the clamping effect against the wing. Compressible material such as rubber or foam can be sandwiched between the clasp and the wing so as to ensure firm clamping, and to take up any tolerances between the shape of the clamp and that of the outer surface of the wing.

The invention will now be described by way of example only and with reference to the accompanying drawings, in which:
Figure 1 is a perspective schematic drawing of an embodiment of a fitting in accordance with the invention mounted on an aircraft wing;
Figure 2 is a schematic drawing of the embodiment of Figure 1 from a different perspective, and
Figure 3 is a schematic drawing of the embodiment of Figure 1 from a similar perspective, showing an external load attached to the fitting.

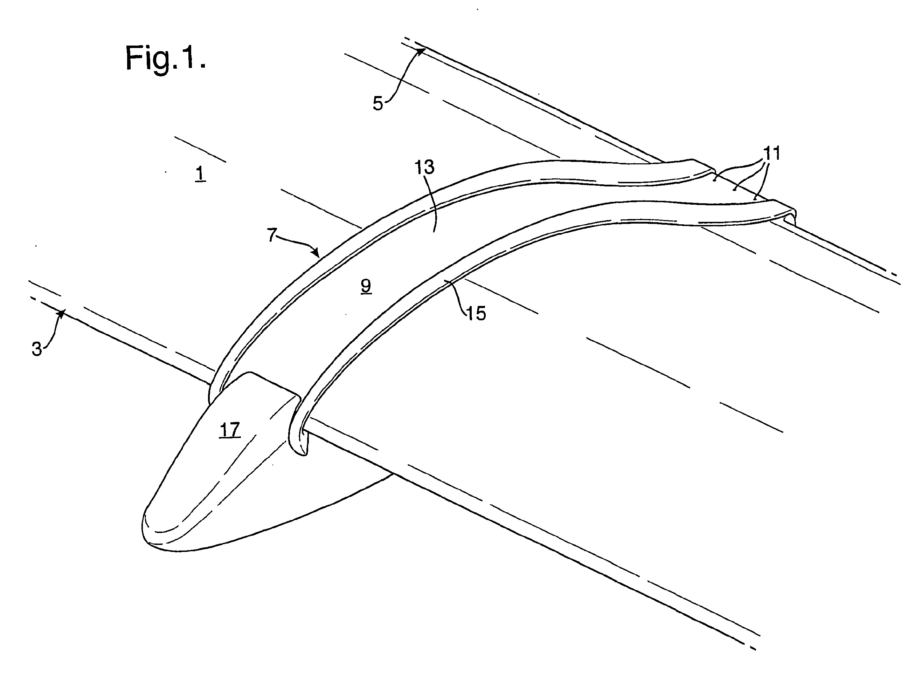

Figure 1 shows a portion of an aircraft wing 1 which has leading and trailing edges 3, 5, to which is mounted a fitting 7 for connecting an external load (not shown) to the aircraft. Fitting 7 comprise a band-like clasp 9 which surrounds the wing 1 and is clamped to it. The clasp 9 is configured so as closely to conform to the aerodynamic outer surface of the wing 1, and is openable (by way of a hinge (not shown) or by virtue of being flexible) to allow the wing 1 to be introduced into the clasp 9. The clasp 9 is then closed by fixing bolts or other fixing devices through the holes 11 in the clasp 9 located adjacent the trailing edge 5 of the wing, so as to minimise unwanted aerodynamic effects when the aircraft is in flight. Closure of the bolts or other fixings tightens the clasp 9 around the wing, holding the clasp 9 firmly to the surface of the wing 1. The clasp 9 comprises a structural element 13, which gives the necessary strength and rigidity, and a compressible material 15, which in use is sandwiched between the structural element 13 and the outer surface of the wing 1 (Figure 1 shows only the outer edges of the compressible material, which is in the form of a band) and acts to spread loads more effectively between the fitting 7 and the wing 1 and also to improve the clamping therebetween.

The outer surface of the clasp 9 is substantially flat, and blends into the aerodynamic surface of the wing, so as to reduce aerodynamic drag effects.

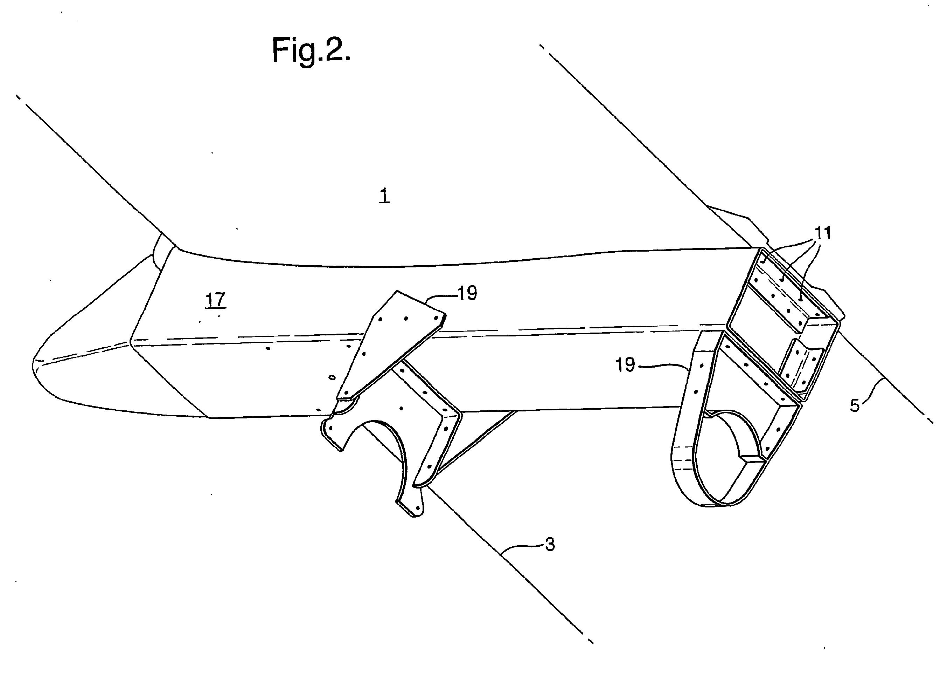

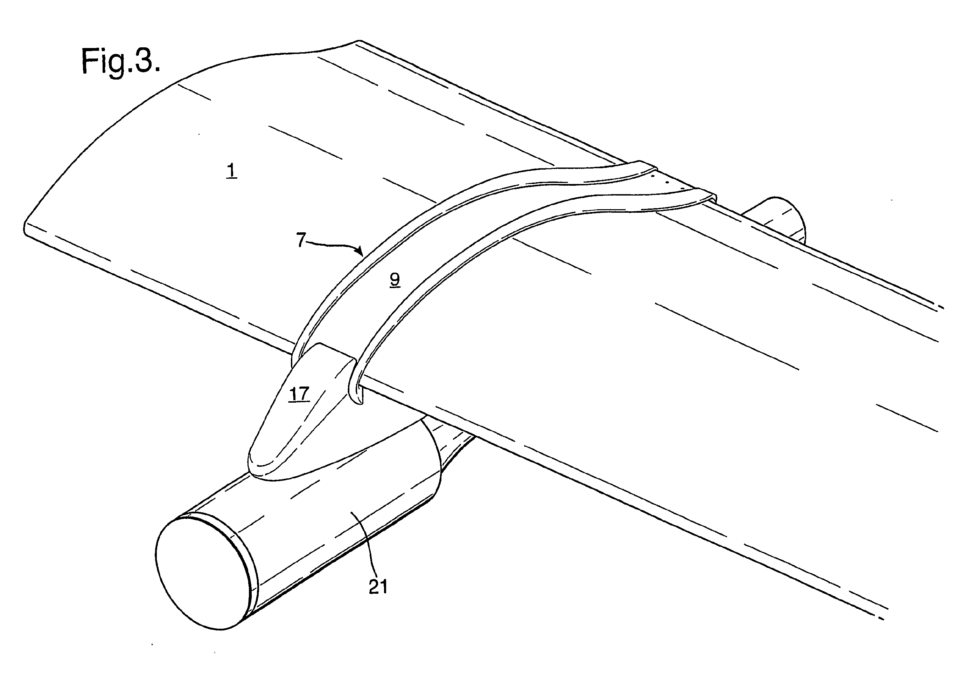

The fitting 7 also comprises a streamlined enclosure, or pylon 17, shown more clearly in Figure 2. The pylon 17 in use hangs underneath the wing 1 (and hides from view the part of the clasp 9 which encloses the lower surface of the wing 1, and any hinge mechanism) and is provided with brackets 19 for releasably attaching a load 21 (see Figure 3). The brackets 19 are configured so as to hold a particular load in a position relative to the pylon 17 so as to give a good, aerodynamically-blended shape in the direction of aircraft travel so as to reduce the effects of aerodynamic drag of the fitting and load on the aircraft. The brackets 19 may be replaced by differently shaped and/or sized ones in order to attach a different type of load to the aircraft wing 1.

The Figures show an aircraft wing 1 which is substantially normal to the axis of the aircraft, and which is of substantially constant cross-section along its length. The Figures also show that the fitting 7 and external load 21 are mounted so as to be substantially normal to the wing 1; this is desirable, because it is usually necessary for the external load 21 and the pylon 17 to lie substantially parallel to the forward axis of the aircraft, so as to reduce unwanted aerodynamic drag effects on the aircraft. It will be readily apparent to those skilled in the art that the shape and configuration of the clasp 9, and the pylon 17 and/or the brackets 19 could easily be adapted to mount a load parallel to the front-rear axis of the aircraft where the wings of that aircraft were swept, and/or of varying cross section along their length.

Notwithstanding the arrangements described above intended to reduce aerodynamic drag, it should be noted that this invention is principally applicable to aircraft, manned or unmanned, which fly at relatively low speeds (up to 1-200 mph (160 - 320 kph) for example) where aerodynamic drag is not an issue. The invention could be applied to higher speed aircraft, but would then give rise to substantial drag forces which would act on the wing and which the wing might not have been designed to handle. The advantage of applying the invention to a low speed aircraft is that the aerodynamic drag forces are sufficiently low that structural re-design of the wing is unnecessary.

It will also be understood that arrangements may be needed to provide communication/control links between the external load and the aircraft; this can be by wireless means, or the fitting could be located on the wing so that it overlies an access panel (usually on the underside of the wing) through which the necessary electrical/electronic/mechanical connections can easily be made.

## Claims

1. A fitting (7) for demountably connecting an external load (21) to an aircraft wing (1) having an aerodynamic outer surface, the fitting being for use when the aircraft is in flight, the fitting comprising a selectively operable clasp (9), the inner surface of which is configured when the clasp is closed so as to surround a portion of the wing and to conform closely to the aerodynamic outer surface, so as to clamp the fitting firmly to the wing, and means (11) to hold the clasp in the closed position around the wing.

2. A fitting as claimed in Claim 1, wherein the clasp is configured so as to overlie the wing parallel to the forward axis of the aircraft.

3. A fitting as claimed in Claim 1 or 2, wherein the outer surface of the clasp is configured so as to blend smoothly with the aerodynamic outer surface of the wing.

4. A fitting as claimed in Claim 1, 2 or 3, wherein the clasp is at least partially formed of a flexible material so as to provide a snap fit on the outer surface of the wing.

5. A fitting as claimed in any preceding Claim wherein the clasp has an opening to allow the admission of the wing, the holding means being located so as to draw the opening together, thereby to clamp the fitting to the wing.

6. A fitting as claimed in any preceding Claim wherein the holding means is located so as to be positioned proximate a trailing edge (5) of the wing.

7. A fitting as claimed in any preceding Claim comprising a hinge means to facilitate opening and closing of the clasp.

8. A fitting as claimed in any preceding Claim comprising compressible material (15) on the inner surface of the clasp.

9. A fitting as claimed in any preceding Claim comprising means (17) for releasably attaching the load to the fitting.

10. An aircraft system comprising a wing and at least one fitting as claimed in any preceding claim.

## Patentansprüche

1. Eine Befestigungsvorrichtung (7) zum demontierbaren Verbinden einer externen Ladung (21) mit einem Luftfahrzeugflügel (1), der eine aerodynamische Außenoberfläche aufweist, wobei die Befestigungsvorrichtung zur Verwendung ist, wenn sich das Luftfahrzeug im Flug befindet, wobei die Befestigungsvorrichtung eine selektiv bedienbare Spange (9), deren Innenoberfläche konfiguriert ist, wenn die Spange geschlossen ist, um einen Abschnitt des Flügels zu umschließen und eng an die aerodynamische Außenoberfläche zu passen, um die Befestigungsvorrichtung fest an den Flügel zu klammern, und ein Mittel (11), um die Spange in der geschlossenen Position um den Flügel herum zu halten, beinhaltet.

2. Befestigungsvorrichtung gemäß Anspruch 1, wobei die Spange konfiguriert ist, um parallel zu der Vorwärtsachse des Luftfahrzeugs auf dem Flügel aufzuliegen.

3. Befestigungsvorrichtung gemäß Anspruch 1 oder 2, wobei die Außenoberfläche der Spange konfiguriert ist, um sich glatt an die aerodynamische Außenoberfläche des Flügels anzufügen.

4. Befestigungsvorrichtung gemäß Anspruch 1, 2 oder 3, wobei die Spange mindestens teilweise aus einem elastischen Material gebildet ist, um eine Schnappverbindung an der Außenoberfläche des Flügels bereitzustellen.

5. Befestigungsvorrichtung gemäß einem der vorhergehenden Ansprüche, wobei die Spange eine Öffnung aufweist, um die Aufnahme des Flügels zu ermöglichen, wobei das Haltemittel so platziert ist, dass die Öffnung zusammengezogen wird, wodurch die Befestigungsvorrichtung an den Flügel geklammert wird.

6. Befestigungsvorrichtung gemäß einem der vorhergehenden Ansprüche, wobei das Haltemittel so platziert ist, das es nahe an einer Hinterkante (5) des Flügels positioniert ist.

7. Befestigungsvorrichtung gemäß einem der vorhergehenden Ansprüche, die ein Gelenkmittel beinhaltet, um ein Öffnen und Schließen der Spange zu erleichtern.

8. Befestigungsvorrichtung gemäß einem der vorhergehenden Ansprüche, die an der Innenoberfläche der Spange komprimierbares Material (15) beinhaltet.

9. Befestigungsvorrichtung gemäß einem der vorhergehenden Ansprüche, die ein Mittel (17) zum lösbaren Anbringen der Ladung an der Befestigungsvorrichtung beinhaltet.

10. Ein Luftfahrzeugsystem, das einen Flügel und mindestens eine Befestigungsvorrichtung gemäß einem der vorhergehenden Ansprüche beinhaltet.

## Revendications

1. Une pièce de fixation (7) destinée à raccorder de façon démontable une charge externe (21) à une aile d'aéronef (1) ayant une surface extérieure aérodynamique, la pièce de fixation étant destinée à être utilisée lorsque l'aéronef est en vol, la pièce de fixation comprenant une attache opérationnelle de façon sélective (9), dont la surface intérieure est configurée lorsque l'attache est fermée de sorte à entourer une portion de l'aile et à épouser étroitement la surface extérieure aérodynamique, de sorte à pincer la pièce de fixation fermement sur l'aile, et un moyen (11) pour retenir l'attache dans la position fermée autour de l'aile.

2. Une pièce de fixation telle que revendiquée dans la revendication 1, dans laquelle l'attache est configurée de sorte à recouvrir l'aile de façon parallèle à l'axe avant de l'aéronef.

3. Une pièce de fixation telle que revendiquée dans la revendication 1 ou la revendication 2, dans laquelle la surface extérieure de l'attache est configurée de sorte à se combiner de façon lisse avec la surface extérieure aérodynamique de l'aile.

4. Une pièce de fixation telle que revendiquée dans la revendication 1, la revendication 2 ou la revendication 3, dans laquelle l'attache est au moins en partie formée en un matériau flexible de sorte à fournir un emboitement-pression sur la surface extérieure de l'aile.

5. Une pièce de fixation telle que revendiquée dans n'importe quelle revendication précédente dans laquelle l'attache a une ouverture pour permettre l'admission de l'aile, le moyen de retenue étant situé de sorte à tirer l'ouverture ensemble, pour de ce fait pincer la pièce de fixation sur l'aile.

6. Une pièce de fixation telle que revendiquée dans n'importe quelle revendication précédente dans laquelle le moyen de retenue est situé de sorte à être positionné à proximité d'un bord de fuite (5) de l'aile.

7. Une pièce de fixation telle que revendiquée dans n'importe quelle revendication précédente comprenant un moyen formant charnière pour faciliter l'ouverture et la fermeture de l'attache.

8. Une pièce de fixation telle que revendiquée dans n'importe quelle revendication précédente comprenant un matériau compressible (15) sur la surface intérieure de l'attache.

9. Une pièce de fixation telle que revendiquée dans n'importe quelle revendication précédente comprenant un moyen (17) destiné à attacher de façon détachable la charge sur la pièce de fixation.

10. Un système d'aéronef comprenant une aile et au moins une pièce de fixation telle que revendiquée dans n'importe quelle revendication précédente.
